# EUROPEAN PATENT SPECIFICATION

(11) **EP 0 438 210 B1**
(45) Date of publication and mention of the grant of the patent: **22.11.1995**
(21) Application number: 91300047.7
(22) Date of filing: 03.01.1991
(51) Int. Cl.: B65D 81/24, A23B 7/148, A23B 7/152

(54) **Apparatus for the storage and/or ripening of produce**
Vorrichtung zum Konservieren und/oder Nachreifen von Lebensmitteln
Dispositif de stockage et/ou de mûrage pour denrées

(30) Priority: 05.01.1990 GB 9000286
(43) Date of publication of application: 24.07.1991
(73) Proprietor: The BOC Group plc, Windlesham Surrey GU20 6HJ (GB)
(72) Inventor: Garrett, Michael Ernest, Woking, Surrey (GB)
(74) Representative: Bousfield, Roger James

(56) References cited:
- EP-A- 0 254 947
- GB-A- 13 755
- PLASTICA, vol. 15, no. 8, August 1962; "Samenklapbare container"

## Description

This invention relates to apparatus and processes for the control of atmospheres in which produce, for example fruit and/or vegetables may, be stored and/or ripened. It applies in particular to produce which has been transported under controlled atmospheres and which is therefore of very high quality on receipt at the warehouse in which the produce is to be stored.

When produce such as fruit and vegetables are moved around the world from producers to consumers they are often shipped in a state of un-ripeness so as to minimise deterioration of the produce during transit. Recent advances employed in in-transit controlled atmospheres enables produce to be shipped in a higher state of ripeness and consequently a higher degree of atmosphere and temperature control must be maintained through the distribution system.

During transit the produce is often placed in containers and maintained at a strictly controlled temperature, for example about 1°C, and on arrival the produce is usually held in warehouses under similar conditions until needed by the retailers.

The produce in the warehouses therefore remains in an unripe condition. It is, however, normal practice for the produce to be subjected to an increased temperature and an exposure to a minute quantity of ethylene for a period of a few days prior to dispatch from the warehouse to induce the product to ripen.

There are, however, problems associated with subjecting the produce to the higher temperature and to the ethylene containing atmosphere as it necessitates the removal of the produce, normally contained in individual pallets, from the cold storage/atmosphere controlled area into a warmer one and then moving them again to a dispatch area when it is ripe. Such problems can be exacerbated by the fact that the higher temperature required to ripen the produce and the concentration of ethylene in the ripening atmosphere may well vary for different types of produce and it is usually not practicable to provide more than one area or atmosphere within a warehouse in which the ripening can occur.

The present invention is concerned with the provision of a system in which different varieties of produce, especially that contained in or on individual pallets, may be brought to a state of ripeness at a required time by means of the use of an optimum atmosphere and temperature without the necessity of removing the pallets from a cold storage area and without adversely affecting produce in or on neighbouring pallets. It also allows individual pallets to be maintained at different temperatures and in different atmospheres without the need for a general cold storage area.

It is known for European Patent Specification No. 254 947 (Del Monte) that containers are available for surrounding individual amounts of products. However, this prior specification does not address the problem of providing containers which can be used in a system in which different varieties of produce can be held in a warehouse at a optimum atmosphere and temperature by holding the different varieties in individual containers such that the individual varieties may be readily placed in, and removed from, their own containers.

In accordance with the invention, there is provided a container for the storage and/or ripening of produce which comprises surrounding a discrete quantity of produce with a container which has means for circulating an atmosphere of a predetermined composition and temperature about the produce within the container, characterised in that the container is of concertina like shape and secured to a floor or to a ceiling and in that its walls are collapsible in use by means of a concertina action so that the container as a whole can be extended upwardly from a floor or downwardly from a ceiling to surround the produce during the process and thereafter retracted to the floor or to the ceiling for removal of the produce.

Such a container will generally allow separate quantities of produce in a warehouse to be individually ripened in situ without the need to move the produce in question nor affect the atmosphere or temperature associated with the other produce in the warehouse.

Preferably the container is a flexible, preferably plastic, container which is shaped so that it fits fairly closely over the produce to be ripened.

Ideally, the container is constructed so that it can be "concertinaed" or otherwise collapsed to the floor before and after the ripening process and, in use with the produce inside, sealed over the top of the produce.

In an alternative preferred embodiment, the container is constructed so that it can be "concertinaed" downwardly from the ceiling (or whatever) and thereby lowered over the produce for the ripening process and sealed around the base.

The preferred construction of the container is of a flexible plastic material and, most preferably, the container walls comprise a laminate or composite material which advantageously has a flexible insulating interlayer, for example one of an aluminised seal pore foam or even a "pocketed" plastic. In such preferred constructions, there is preferably provided a thermal barrier between the inside and the outside of the container.

The produce, ie fruit or vegetable, to be ripened can be held on or within any suitable pallet or other equivalent object which allows for the ready holding of the produce during storage, transportation and during the ripening process.

The containers must have means for circulating an atmosphere or gas about the produce. This can usefully take the form of two connections which convey the gas to opposite ends of the container. In operation, these can be attached to a ring-main system for circulation of warm ethylene-containing air, the two connections, normally pipes, acting as the supply and return to the system. In use, the ring-main could be brought to convenient points within the warehouse so that produce for ripening can be stored nearby.

Normal types of equipment can of course be provided for the accurate control of temperature, flow-rate and ethylene concentration of the circulating gas.

The invention would allow for the provision in any one warehouse of separate ring mains providing gas having different ethylene concentrations (including zero) and, if appropriate mixing equipment for the control of gas to individual containers or batches of containers.

Furthermore, the circulating gas composition could include gases other than ethylene if desired, for example higher oxygen concentrations. The invention could also be used to enable produce to be stored in a controlled atmosphere by providing a ring-main of nitrogen/carbon dioxide/air with mixers to generate an atmosphere required for the produce in question. In such instances, a humidifier would also commonly be needed.

In general, it will be possible for the circulated gas to be recycled after it leaves the container and means can be provided to separate and/or clean the recycled gases.

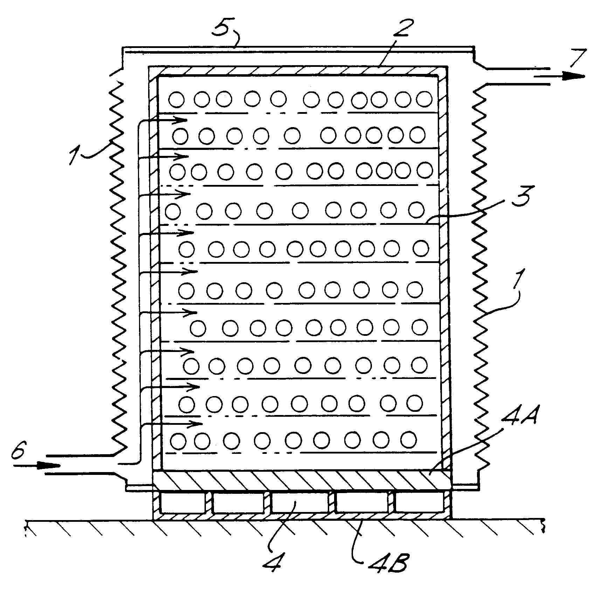

For a better understanding of the invention, reference will now be made, by way of exemplification only, to the accompanying drawing which shows a schematic sectional representation of a container for use in a process of the invention.

With reference to the drawing, there is shown a container 1 which, in the un-collapsed state shown, is of generally rectangular (or circular) cross-sectional shape and of a size which fits fairly closely over a discrete quantity of produce held in a pallet 2 within the container 1. The walls of the container are of concertina construction as shown. The produce shown comprises individual pieces held on racks 3 which are part of the pallet.

The container 1 is sealed along the whole of its lower rectangular (or circular) edge to its base 4 comprising a top portion 4A to which is secured a lower portion 4B constructed so that it can be moved by means of a fork-lift truck or similar vehicle about the warehouse or elsewhere.

A rectangular top portion 5 of the container can also be sealed so that in use it can encapsulate the produce in a substantially sealed manner. A gas inlet 6 and gas outlet 7 are connected to an external gas-main or atmosphere control or mixing system (not shown) so that an atmosphere of a predetermined composition and temperature can be circulated within the container and about the produce at a controlled rate.

Before and after the ripening process, the top portion 5 can be removed and the walls of the container collapsed by means of the concertinaed construction of the walls towards the floor so that positioning of the pallet in the base of the container and its subsequent removal can be effected readily.

To ensure that the space within the container is adequately heat insulated the walls of the container comprise a laminate structure having a flexible interlayer providing the main insulation and thereby maintain the interior of the container at the desired temperature, for example that of the storage gas.

Atmosphere control can be carried in a variety of different ways. Simple introduction of an inert gas, for example nitrogen, is possible but it is preferred that a more sophisticated system is employed. This might involve the continual circulation of the container atmosphere to means which can selectively adsorb unwanted atmosphere components by, for example sieve means, and introduce beneficial components prior to return to the container itself.

In a typical case, a container storage atmosphere comprising a low percentage of oxygen, for example 2.5% by volume, carbon dioxide, for example 2.5% by volume and water vapour, for example to provide a relative humidity of 90%, and a balance of nitrogen. Ethylene (for example that generated naturally by the produce will often need to be removed prior to ripening.

In other systems, the levels of each of oxygen, carbon dioxide, water vapour and ethylene may need to be kept very low, especially the oxygen content.

## Claims

1. A container for the storage and/or ripening of produce which comprises surrounding a discrete quantity of produce with a container (1) which has means for circulating an atmosphere of a predetermined composition and temperature about the produce within the container (1), characterised in that the container is of concertina like shape and secured to a floor or to a ceiling and in that its walls are collapsible in use by means of a concertina action so that the container as a whole can be extended upwardly from a floor or downwardly from a ceiling to surround the produce during the process and thereafter retracted to the floor or to the ceiling for removal of the produce.

2. A container according to Claim 1 in which means (5) are provided for sealing the produce therein.

3. A container according to Claim 1 or Claim 2 whose walls comprise a laminate or composite material.

4. A container according to Claim 3 in which the laminate or composite material has a flexible insulating interlayer.

5. A container according to Claim 3 or Claim 4 in which there is a thermal barrier between the inside and the outside of the container.

## Patentansprüche

1. Behälter zum Speicher und/oder Reifen eines Produkts, welches das Umschließen einer diskreten Produktmenge mit einem Behältnis (1) umfaßt, das Mittel zum Zirkulieren einer Atmosphäre vorgegebener Zusammensetzung und Temperatur um das Produkt innerhalb des Behältnisses (1) aufweist, dadurch gekennzeichnet, daß der Behälter eine zieharmonikaartige Form hat und an einem Boden oder an einer Decke befestigt ist und daß seine Wände im Gebrauch zieharmonikaartig zusammenfaltbar sind, so daß der Behälter als Ganzes vom Boden nach oben ausgedehnt bzw. von der Decke nach unten ausgedehnt werden kann, um das Produkt während des Prozesses zu umschließen, und anschließend wieder auf den Boden bzw. an die Decke zurückgeführt werden kann, um das Produkt zu entnehmen.

2. Behälter nach Anspruch 1, wobei Mittel (5) zum dichten Abschließen des darin befindlichen Produkts vorgesehen sind.

3. Behälter nach Anspruch 1 oder 2, dessen Wände ein Laminat oder Kompositmaterial aufweisen.

4. Behälter nach Anspruch 3, wobei das Laminat oder Kompositmaterial eine flexible isolierende Zwischenschicht enthält.

5. Behälter nach Anspruch 3 oder 4, wobei eine Wärmesperre zwischen dem Inneren und dem Äußeren des Behälters vorgesehen ist.

## Revendications

1. Récipient de stockage et/ou de mûrissage de produit qui comprend la disposition, autour d'une quantité déterminée de produit, d'un récipient (1) qui comporte un dispositif destiné à la circulation d'une atmosphère de composition et de température prédéterminées autour du produit qui se trouve dans le récipient (1), caractérisé en ce que le récipient a une configuration en accordéon et est fixé à un plancher ou à un plafond, et en ce que ses parois peuvent être pliées pendant l'utilisation par un pliage en accordéon afin que le récipient dans son ensemble puisse être allongé vers le haut depuis le sol ou vers le bas depuis un plafond et entoure le produit lors de la mise en oeuvre du procédé, et puisse ensuite être reculé vers le sol ou le plafond pour l'extraction du produit.

2. Récipient selon la revendication 1, dans lequel un dispositif (5) est destiné à enfermer le produit de manière étanche à l'intérieur.

3. Récipient selon la revendication 1 ou 2, dont les parois sont formées d'un matériau composite ou stratifié.

4. Récipient selon la revendication 3, dans lequel le matériau composite ou stratifié possède une couche intermédiaire souple d'isolation.

5. Récipient selon la revendication 3 ou 4, dans lequel une barrière thermique est placée entre l'intérieur et l'extérieur du récipient.
